(19) **Europäisches Patentamt**
**European Patent Office**
**Office européen des brevets**

(11) **EP 2 512 857 B1**

(12) **EUROPÄISCHE PATENTSCHRIFT**

(45) Veröffentlichungstag und Bekanntmachung des Hinweises auf die Patenterteilung:
**06.11.2013 Patentblatt 2013/45**

(21) Anmeldenummer: **10788061.9**

(22) Anmeldetag: **02.12.2010**

(51) Int Cl.:
***B60K 15/04*** (2006.01)

(86) Internationale Anmeldenummer:
**PCT/EP2010/068729**

(87) Internationale Veröffentlichungsnummer:
**WO 2011/082906 (14.07.2011 Gazette 2011/28)**

(54) **KRAFTSTOFFTTANKANBAUTEIL UND VERFAHREN ZUR HERSTELLUNG EINES KRAFTSTOFFTANKANBAUTEILS**

FUEL TANK ACCESSORY AND METHOD FOR PRODUCING A FUEL TANK ACCESSORY

ELÉMENT À RAPPORTER SUR UN RÉSERVOIR DE CARBURANT ET PROCÉDÉ DE FABRICATION ASSOCIÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.12.2009 DE 202009016927 U**

(43) Veröffentlichungstag der Anmeldung:
**24.10.2012 Patentblatt 2012/43**

(73) Patentinhaber: **Feichtinger, Reinhard**
**91785 Pleinfeld-Ramsberg (DE)**

(72) Erfinder: **AMESÖDER, Simon**
**91710 Gunzenhausen (DE)**

(74) Vertreter: **Richardt Patentanwälte GbR**
**Wilhelmstraße 7**
**65185 Wiesbaden (DE)**

(56) Entgegenhaltungen:
| | |
|---|---|
| EP-A1- 1 108 653 | EP-A1- 1 396 326 |
| EP-A2- 1 632 380 | WO-A1-2008/113821 |
| DE-A1- 10 062 997 | DE-C1- 19 535 413 |
| US-A1- 2003 124 281 | US-A1- 2003 173 776 |
| US-A1- 2006 099 365 | |

EP 2 512 857 B1

## Beschreibung

Die Erfindung betrifft ein Kraftstofftankanbauteil, einen Kraftstofftank, insbesondere einen Kraftfahrzeugkraftstofftank, sowie ein Verfahren zur Herstellung eines Kraftstofftankanbauteils.

Aus der US 2006 099 365 A1 ist ein Anbauteil bekannt, das einen ersten und einen zweiten Bereich aufweist. Der erste und der zweite Bereich weisen beide die gleiche nicht-mischbare Mischung aus einem kraftstoffbeständigen Ethylenvinylalkohol-Copolymer, einem nicht-kraftstoffbeständigen HDPE und einem gepfropften Kompatibilisator auf Basis von HDPE auf.

Aus der EP 1 108 653 A2 ist ein Kraftstofftank mit einem Containerbereich aus HDPE und einem Anbau aus einem nicht mischbaren Blend aus kraftstoffbeständigen Kunststoff, z. B. Polyamid, HDPE und einem Kompatibilisator bekannt.

Ein Anbauteil ist auch aus der US 2003/0124281 A1 bekannt. Es hat einen spritzgegossenen Anschlussnippel aus einem glasgefüllten Polyamid, der mit einer coextrudierten Folie bestehend aus einem Polyamid, einem funktionalisiertem Polyethylen und einem Polyethylen hoher Dichte verbunden ist. Das so realisierte Element ist auf einen ein- oder mehrschichtigen Tank aus überwiegend HPDE aufgeschweißt. Damit kann lediglich ein flüssigkeits- oder dampfführendes System mit einer Fügezone aus einem coextrudierten Mehrschichtverbund realisiert werden.

Aus der DE 195 35 413 C1 ist ein Bauteil bekannt, das aus einem rohrförmigen Körper aus thermoplastischem Kunststoff, der an einem Ende einen abgestuften Ringkörper und am entgegen gesetzten Ende eine Halterippe aufweist, besteht. Versetzt um die Wandstärke des Körpers gegenüber dem Körperinnendurchmesser ist ein umlaufender Ring mit einem Vorsprung angeformt. In den abgestuften Ringkörper ist als Haftvermittler eine Zwischenschicht eingebracht. Darunter ist unter Einschluss des Rings mit dem Vorsprung ein Ringkörperelement angeformt. Durch Erhitzen werden dann das Ringkörperelement, die Zwischenschicht und der umlaufende Ring des rohrförmigen Körpers zusätzlich zu der mechanischen Verbindung, die der umlaufende Vorsprung bewirkt, miteinander verbunden.

Da diese Form der Verbindung einer Quellung der Kunststoffe nicht standhält, wird nach DE 100 62 997 A1 der Kunststoff des Ringkörperelements in der Weise vernetzt, dass eine chemische Verbindung zwischen den Kunststoffen beider Teile durch Brückenbildung über die Grenzfläche zwischen den Teilen hinweg bewirkt wird. Der rohrförmige Körper wird an seinem zum Behälter zeigenden Ende in einen Innen- und einen Außenrohrkörper geteilt.

Aus der WO 2008/113821 A1, von der die Erfindung als nächstkommenden Stand der Technik ausgeht, ist ein Kraftstofftankanbauteil bekannt, welches einen ersten Bereich aufweist, der aus einem ersten Kunststoff besteht, und einen zweiten Bereich, wobei der zweite Bereich eine Mischung des ersten Kunststoffs und eines zweiten Kunststoffs aufweist, wobei der erste und der zweite Bereich stoffschlüssig miteinander verbunden sind. Durch den aus der Mischung bestehenden zweiten Bereich wird eine stoffschlüssige Verbindung des Kraftstofftankanbauteils mit einer Außenwandung eines Kraftstofftanks ermöglicht, wobei die Außenwandung aus dem zweiten Kunststoff besteht. Nachteilig ist hierbei insbesondere der fertigungstechnische Aufwand für die Herstellung eines solchen Kraftstofftankanbauteils, da dieses zwei verschiedene Bereiche aufweist, die aus unterschiedlichen Kunststoffen bzw. Kunststoffmischungen bestehen, welche stoffschlüssig miteinander zu verbinden sind, um somit erst die Möglichkeit zur stoffschlüssigen Verbindung mit dem Kraftstofftank zu schaffen.

Der Erfindung liegt demgegenüber die Aufgabe zugrunde, ein verbessertes Kraftstofftankanbauteil und Verfahren zu dessen Herstellung zu schaffen, sowie ein Kraftstofftanksystem.

Die der Erfindung zu Grunde liegenden Aufgaben werden jeweils mit den Merkmalen der unabhängigen Patenansprüche gelöst. Ausführungsformen der Erfindung sind in den abhängigen Patentansprüchen angegeben.

Ausführungsformen der Erfindung haben insbesondere den Vorteil, dass das Kraftstofftankanbauteil kostengünstig herzustellen ist und betriebssicher mit einem Kraftstofftank zu verbinden ist.

Unter einem "Kraftstofftankanbauteil" werden hier alle Bauteile verstanden, die sich zum Anbauen an einen Kraftstofftank eignen, insbesondere Stutzen, Ventile, insbesondere Tankentlüftungsventile, Verschlusselemente oder dergleichen.

Bei dem ersten Kunststoff handelt es sich um kraftstoffbeständigen Kunststoff. Unter einem kraftstoffbeständigen Kunststoff wird hier ein Kunststoff verstanden, der nicht oder nur wenig aufquillt und der keine oder nur eine geringe Durchlässigkeit , (Permeabilität) für Kraftstoff oder Öl aufweist, wenn er über längere Zeit einem Kraftstoff oder Öl ausgesetzt wird. Insbesondere wird hier unter einem kraftstoffbeständigen Kunststoff ein Kunststoff verstanden, der die Normen Lev II und PZEV in Bezug auf Emissionen erfüllt.

Bei dem ersten kraftstoffbeständigen Kunststoff kann es sich zum Beispiel um Polyamid (PA), insbesondere PA 12, oder Polyoxymethylen (POM) handeln. Es kann sich bei dem ersten Kunststoff aber auch um einen anderen kraftstoffbeständigen thermoplastischen Kunststoff oder eine kraftstoffbeständige Mischung von kompatiblen Kunststoffen handeln.

Bei dem zweiten Kunststoff handelt es sich um einen nicht kraftstoffbeständigen Kunststoff.

Unter einem "nicht kraftstoffbeständigen Kunststoff" wird hier ein Kunststoff verstanden, der aufquillt oder sonst in seinen Abmessungen oder mechanischen Eigenschaften wesentlich verändert wird, wenn er über einen längeren Zeitraum mit Kraftstoff in Berührung kommt, und/oder der für Kraftstoff oder Öl nicht fluiddicht ist. Beispielsweise kann es sich bei einem solchen zweiten nicht kraftstoffbeständigen Kunststoff um Polyethylen (PE) oder Polypropylen (PP) handeln. Es kann sich bei dem zweiten Kunststoff aber auch um einen anderen nicht kraftstoffbeständigen thermoplastischen Kunststoff oder eine Mischung von kompatiblen Kunststoffen handeln, die nicht kraftstoffbeständig sind.

Der erste und der zweite Kunststoff sind an sich nicht mischbar. Die Mischung beinhaltet daher einen Kompatibilisator, um die ersten und zweiten Kunststoffe miteinander mischbar zu machen.

Ausführungsformen der Erfindung sind insbesondere vorteilhaft, um die Kosten des Kraftstofftankanbauteils zu senken. Im Allgemeinen ist nämlich der erste kraftstoffbeständige Kunststoff wesentlich teurer, als der zweite nicht kraftstoffbeständige Kunststoff. Da die ersten und zweiten Kunststoffe aber nicht miteinander mischbar sind und daher normalerweise keine stoffschlüssige, fluiddichte Verbindung zwischen den beiden Kunststoffen hergestellt werden kann, wird gemäß Stand der Technik im Allgemeinen das Kraftstofftankanbauteil hauptsächlich oder nur aus dem ersten Kunststoff bestehen, was entsprechend teuer ist.

Gemäß WO 2008/113821 werden diejenigen Bereiche des Kraftstofftankanbauteils, die dem Kraftstoff im Normalbetrieb, d.h. nach Anbau an einen Kraftstofftank und Befüllung des Kraftstofftanks mit Kraftstoff, ausgesetzt sind, aus dem ersten Kunststoff zu gefertigt, wohingegen ein oder mehrere weitere Bereiche, die dem Kraftstoff normalerweise nicht oder nicht direkt ausgesetzt sind, aus der Mischung gefertigt werden, die nur einen gewissen Anteil des ersten Kunststoffs aufweist, um die stoffschlüssige Verbindung mit den ersten Bereichen zu ermöglichen.

Die vorliegende Erfindung wendet sich von diesem Ansatz ab, indem nicht nur ein einzelner Bereich, der für die stoffschlüssige Verbindung mit dem Kraftstofftank benötigt wird, sondern vorzugsweise das gesamte Kraftstofftankanbauteil aus der Mischung der ersten und zweiten Kunststoffe gefertigt wird, wie zum Beispiel durch ein 1-Komponenten-Kunststoffspritzgussverfahren, durch ein Extrusionsverfahren oder ein anderes Formverfahren.

Dadurch entfällt die Notwendigkeit zur Herstellung einer stoffschlüssigen Verbindung zwischen dem ersten Kunststoff und der Mischung, wie zum Beispiel durch ein relativ aufwändiges 2-Komponenten-Spritzgussverfahren. Anstelle dessen kann das Kraftstofftankanbauteil durch ein 1-Komponenten-Kunststoffspritzgussverfahren hergestellt werden, indem die plastifizierte Mischung bestehend aus dem ersten und zweiten Kunststoff und dem Kompatibilisator in eine Form eingespritzt wird. Zum anderen ist trotzdem eine hinreichende Kraftstoffbeständigkeit des Kraftstofftankanbauteils gegeben, welches dieses aufgrund des ersten in der Mischung vorhandenen Kunststoffs überraschenderweise erlangt. Hierdurch ermöglicht es die Erfindung, einerseits den fertigungstechnischen Aufwand für die Herstellung des Kraftstofftankanbauteils zu reduzieren, wobei dennoch in erheblichem Umfang die Materialmenge von erstem Kunststoff eingespart wird, da dieser teilweise durch den zweiten Kunststoff ersetzt wird, wobei andererseits dennoch eine hinreichende Kraftstoffbeständigkeit auch im Langzeitbetrieb überraschenderweise gegeben ist.

Ferner haben Ausführungsformen der Erfindung auch mechanische Vorteile:

     Nach einer Ausführungsform der Erfindung handelt es sich bei dem Kompatibilisator um ein Copolymer der ersten und zweiten Kunststoffe. Die Verwendung eines solchen Kompatibilisators hat insbesondere den Vorteil, dass nicht noch ein weiterer von den ersten und zweiten Kunststoffen verschiedener Werkstoff in die Mischung eingebracht werden muss. Ein solcher weiterer Werkstoff könnte nämlich hinsichtlich der Dichtigkeit und Langzeitbeständigkeit problematisch sein.

Nach einer Ausführungsform der Erfindung handelt es sich bei dem Polymer um ein "gepfropftes Copolymer". Unter einem "gepfropftes Copolymer" wird hier ein Copolymer verstanden, das wie folgt hergestellt wird: Zur Herstellung des gepfropften Copolymers wird einer der ersten und zweiten Kunststoffe gepfropft, so dass der gepfropfte Kunststoff dann mit dem anderen der beiden Kunststoffe kovalente Bindungen eingehen kann. Die Pfropfung des Kunststoffs erfolgt beispielsweise mit einem reaktiven Rest, wie zum Beispiel einen Maleinsäureanhydrid oder einem Acetylsäurerest. Das Copolymer wirkt dann in der Mischung der ersten und zweiten Kunststoffe ähnlich wie ein Emulgator.

Nach einer Ausführungsform der Erfindung wird das Copolymer mit Hilfe eines zusätzlichen Kompatibilisators hergestellt, der einer Mischung des ersten und des zweiten Kunststoffs in fester oder flüssiger Form zugegeben wird, und der zumindest teilweise bei der Copolymerisierung verbraucht wird. Der zusätzliche Kompatibilisator reagiert dabei sowohl mit dem ersten also auch mit dem zweiten Kunststoff.

Nach einer Ausführungsform der Erfindung beinhaltet der zusätzliche Kompatibilisator reaktive Isocyanatgruppen und/oder Oligomere mit Epoxidgruppen und/oder (Maleinsäure-) Anhydrid-Gruppen oder Oxazolin-Gruppen.

Nach einer Ausführungsform der Erfindung ist der Anteil des ersten Kunststoffs an der Mischung geringer als der Anteil des zweiten Kunststoffs. Beispielsweise kann der Anteil des ersten Kunststoffs maximal 35 Gew.-%, insbesondere zwischen 20 Gew.-% und 30 Gew.-% betragen.

Nach einer Ausführungsform der Erfindung ist das Kraftstofftankanbauteil zumindest in einem ersten Bereich für eine stoffschlüssige Verbindung mit einem zweiten Bereich ausgebildet, wobei sich der zweite Bereich an einer Außenwandung eines Kraftstofftanks befindet. Beispielsweise besteht der zweite Bereich aus dem zweiten Kunststoff, so dass aufgrund des Vorhandenseins des zweiten Kunststoffs in der Mischung die stoffschlüssige Verbindung realisierbar ist.

Die mit Ausführungsformen der Erfindung erzielbaren Vorteile bestehen insbesondere darin, dass der erste und der zweite Bereich unmittelbar miteinander verbunden werden. Der erste Bereich wird so aufgewertet, dass er kraftstoffbeständig und zugleich verbindbar ist. Hier handelt es sich um eine stoffschlüssige Verbindung. Für die Kraftstofftankanbauteile bedeutet das, dass sie in beliebiger Stückzahl vor gefertigt werden können und ohne Zwischenstücke mit dem Tank verschweißt werden können. Außerdem verringern sich durch den Einsatz nicht beständigen Kunststoffs die Kosten für die Herstellung des Kraftstoffanbauteils beträchtlich. Je höher der Anteil nicht kraftstoffbeständigen Kunststoffs ist, umso preisgünstiger wird die einsetzte Mischung und damit das Kraftstoffanbauteil.

Die Mischung kann wenigstens

- 10 bis 85 Gew.-% des ersten kraftstoffbeständigen Kunststoffs,
- 85 bis 10 Gew.-% des zweiten nicht kraftstoffbeständigen Kunststoffs,
- 3 bis 15 Gew.-% Kompatibilisator und
- ca. 5 bis 30 Gew.-% Zusätze enthalten.

Vorteilhafterweise kann die Mischung aus

- ca. 45 Gew.-% des ersten kraftstoffbeständigen Kunststoffs,
- ca. 45 Gew.-% des zweiten nicht kraftstoffbeständigen Kunststoffs,
- ca. 10 Gew.-% Kompatibilisator, Zusätzen und Füllstoffen bestehen.

Unter der Angabe "ca." wir hier beispielsweise ein Bereich von +/- 5% des jeweils angegebenen Wertes verstanden.

Der erste Kunststoff kann ein Polyamid und der zweite Kunststoff ein Polyethelen sein.

Als Polyamid kann ein PA6, PA66, PA11, PA12, PA6-T, also die gesamte Polyamid-Palette zum Einsatz kommen. Ebenso kann die gesamte Polyethelen-Palette eingesetzt werden.

Der Kompatibilisator kann ein Copolymer des ersten und des zweiten Kunststoffs sein.

Das Copolymer kann ein reaktiv erzeugtes Copolymer sein. Das Copolymer kann außerdem einen zusätzlichen Kompatibilisator aufweisen.

Die Zusätze können gestanzte Metallfilter, Flammschutzmittel, Schlagzähmodifikatoren, Antistatika Leitfähigkeitsadditive und dgl. sein.

Die Füllstoffe können Glasfasern, Glaskugeln, Mineralstoffe oder dgl. sein.

Zum Anschließen an eine Öffnung eines Behälters aus überwiegend Polyethelen, kann

- ein Rohrkörperelement mit einem daran angeordneten Ringkörperelement vorgesehen werden,
- wobei das Rohrkörperelement und das Ringkörperelement einteilig aus der Mischung hergestellt werden können, so dass das Copolymer-Ringkörperelement mit einem Flächenelement mit der Außenwandung des Kraftstofftanks verbunden werden kann.

Das Copolymer-Ringelement kann in einem Abstand von der Rohraustrittsöffnung des Rohrkörperelements am Rohrkörperelement angeordnet sein. Hierdurch kann der Kraftstoff von der Schweißstelle fern gehalten werden.

Ein Innendurchmesser des Rohrkörperelements kann grösser als ein Durchmesser der Öffnung des Behälters sein.

Das Rohrkörperelement kann wenigsten eine umlaufende Anschlussrippe aufweisen.

Das Kraftstofftankanbauteil kann beispielsweise eine Funktion als Stutzen, Tankentlüftungsventil, Verschlusselement oder dgl. wahrnehmen.

Nach einer Ausführungsform der Erfindung kann wenigstens auf einem Flächenelement des Copolymer- Flanschkörpers, d.h. dem zweiten Bauelement, wenigstens teilweise eine Schicht aufgebracht sein. Diese Schicht verstärkt die guten Haftungseigenschaften zusätzlich. Die Schicht kann also vollständig oder nur punktuell auf das Flächenelement aufgebracht werden. Bereits eine punktuell aufgebrachte Schicht sichert gute Haftungseigenschaften. Diese Schicht kann ca. 0, 001 $\mu$m bis 100 $\mu$m dick sein.

Die Schicht kann beispielsweise durch eine Plasmabeschichtung, beispielsweise wie an sich aus der DE 102 23 865 A1 bekannt, vorgenommen werden. Die Plasmabeschichtung kann an einer Fügefläche des Copolymer- Flanschkörpers mit einer chemisch aktiven Schicht erfolgen, wobei die Schicht z.B. niedermolige Polymerfragmente beinhalten kann.

Der Copolymer- Flanschkörper kann zu ca. 10 bis 85 Gew.-% aus Polyamid und ca. 85 bis 10 Gew. % aus Polyethylen sowie ca. 5 Gew.% Zusätzen bestehen. Insbesondere ist ein gleiches Verhältnis Polyamid zu Polyethylen möglich. Wie die Anteile zu verteilen sind, hängt von den jeweiligen Einsatzbedingungen ab. Es ist aber auch möglich, dass der Flanschkörper aus Schichten mit unterschiedlichen Mischungsverhältnissen bestehen kann.

Ein Polyethylen- Flanschkörper kann ca. zu 95 Gew.% aus einem Polyethylen und ca. 5 Gew. % Zusätzen bestehen. Diese üblichen Zusätze können Stabilatoren, Gleitmittel, Farbstoffe, Metallfilter, metallische Pigmente, gestanzte Metallfilter, Flammschutzmittel, Schlagzähmodifaktoren, Antistatika, Leitfähigkeitsadditive und dgl. sein.

Der Innendurchmesser des Flanschkörpers kann größer als ein Durchmesser der Öffnung des Behälters sein. Hierdurch kann der Verbindungsbereich wenigstens teilweise dem Einflussbereich des Kraftstoffes und dessen Dämpfen entzogen und so den Quellkräften entgegen gewirkt werden.

Ein erstes Rohrkörperelement kann an dem Behälter abgewandten Ende in einer Anschlusseinheit enden. Mit einem solchen Rohrkörperelement kann das Bauteil als ein Stutzen eingesetzt werden.

Ein zweites Rohrkörperelement kann an dem Behälter abgewandten Ende mit einem Deckelelement verschlossen sein. In dieser Form kann ein solches Bauteil als ein Verschlusselement für nicht benötigte Öffnungen des Behälters eingesetzt werden.

Unterhalb des Deckelelements des zweiten Rohrkörperelements kann wenigstens ein Anschlussrohrelement angeordnet sein. Hiermit liegt ein Gehäuse für ein Tankentlüftungsventil vor, in das ein Ventilelement eingesetzt werden kann.

Die Anschlusseinheit und/oder die Anschlussrohrelemente können mit wenigstens einer umlaufenden Anschlussrippe enden. Damit ist der Anschluss eines Schlauches möglich.

In einem weiteren Aspekt betrifft die Erfindung einen Kraftstofftank, insbesondere einen Kraftfahrzeugkraftstofftank, wie zum Beispiel einen Kraftstofftank für einen Pkw. Der Kraftstofftank hat eine Öffnung und eine äußere Wandung, die aus dem zweiten Kunststoff bestehen kann. Das Kraftstofftankanbauteil wird beispielsweise teilweise durch die Öffnung in dem Kraftstofftank hindurch geführt und in seinem ersten Bereich mit der äußeren Wandung des Kraftstofftanks stoffschlüssig verbunden, beispielsweise, indem eine Fügefläche des ersten Bereichs an die äußere Wandung angeschweißt wird. Durch das Anschweißen von einem oder mehreren erfindungsgemäßen Kraftstofftankanbauteilen resultiert ein Kraftstofftanksystem.

In einem weiteren Aspekt betrifft die Erfindung ein Verfahren zur Herstellung eines Kraftstofftankanbauteils.

Nach einer Ausführungsform der Erfindung wird eine Fügefläche des ersten Bereichs vor dem stoffschlüssigen Verbinden vorbehandelt, um die Reaktivität der Fügefläche zu erhöhen. Dies kann durch eine Plasmabehandlung der Fügefläche erfolgen, beispielsweise mit Hilfe einer Plasmadüse, wie sie an sich aus der EP 0 986 939 B1 bekannt ist. Überraschenderweise erfolgt durch die Plasmabehandlung nicht nur einer Erhöhung der Reaktivität, sondern auch eine Verbesserung der Kompatibilität, und zwar durch die Entfernung von passivierenden Schichten, die auf der Fügefläche anhaften können. Alternativ oder zusätzlich kann eine Vorbehandlung der Fügefläche durch eine Plasmabeschichtung, Beflammen, chemisches Ätzen oder eine mechanische Vorbehandlung erfolgen. Die Aufgrund einer solchen Vorbehandlung erhöhte Reaktivität der Fügefläche ist insbesondere für die Realisierung der stoffschlüssigen Verbindung zwischen den ersten und zweiten Bauelementen vorteilhaft.

Nach einer Ausführungsform der Erfindung wird die stoffschlüssige Verbindung durch zwei oder mehr Komponente Kunststoff-Spritzguss erzeugt. Hierzu wird beispielsweise zunächst das zweite Bauelement durch Einspritzung der Mischung in eine Form realisiert. Die Form wird dann geöffnet, um eine Fügefläche des zweiten Bauelements vorzubehandeln, beispielsweise durch eine Plasmabehandlung oder eine Plasmabeschichtung. Anschließend wird das erste Bauelement hergestellt und mit dem zweiten Bauelement stoffschlüssig verbunden, indem der erste Kunststoff in die Form eingespritzt wird.

Ausführungsformen der Erfindung sind besonders vorteilhaft, da die Formung und Zusammenfügung der ersten und zweiten Bauelemente, das heißt, beispielsweise eines Rohrkörperelements und eines Flanschkörpers, besonders kostengünstig erfolgen kann.

Vorteilhafter Weise kann wenigstens ein Flächenelement, insbesondere eine Fügefläche, des Flanschkörpers mit einem Plasma beschichtet und dann der Flanschkörper mit dem plasmabehandelten Flächenelement fluiddicht mit dem Ringkörperelement verbunden werden. Durch das Beschichten wird bei gleichzeitiger Haftungserhöhung Material gespart.

Die Schicht kann auf zweierlei Weise erzeugt werden:

Zur Erzeugung einer ersten Schicht kann in einer Gasatmosphäre ein Gas eine Entladung zünden, die aus dem Flanschkörpers Ionen extrahiert, zerstäubt und auf kurze Distanz beschleunigt und als Strahl auf das Flächenelement gelenkt werden können.

Hierfür kann die Entladung aus Luft oder Komponenten der Luft, oder einem Edelgas oder Edelgas und deren Verbindungen als Gas gezündet werden. Edelgas kann Helium, Neon, Argon, Krypton, Xenon, Radon und deren Gemische und/oder Verbindungen sein.

In einer Gasatmosphäre in einem Gas können Komponenten enthalten sein, die im offenen Zustand an dem Flächenelement des Flanschkörpers reagieren und eine zweite Schicht ausbilden können. Hierfür können in Luft als Gas Komponenten organischer Art reagieren. Es können aber auch in Luft als Gas Komponenten anorganischer Art reagieren.

In beiden Fällen kann ein Flächenelement eines Flanschkörpers oder die Flächenelemente einer Vielzahl Flanschkörper behandelt werden. Dadurch, dass die Behandlung offen, also nicht unter Vakuum, erfolgen kann, werden die Kosten sehr nachhaltig gesenkt.

Zur weiteren Materialoptimierung kann für das Rohrkörperelement zuerst ein Körper aus einem thermoplastischen Material geformt werden, der wenigstens teilweise mit einem Polyamidkörper beschichtet werden kann. Ähnlich wie beim Feuerverzinken wird das kostenintensive Material auf ein kostengünstiges aufgebracht, um überwiegend dessen positive Eigenschaften zu nutzen.

Der thermoplastische Materialkörper kann aus Polyester, Polyacetat, Polyolyfin, Fluorthermoplast, Polyphenylsulfid oder einem kostengünstigeren Polyamid, das eine geringere Kraftstoffbeständigkeit hat, geformt werden.

Der Flanschkörper kann dann mit dem Tank verschweißt werden. Ob nun Stutzen oder Blindflansch oder Tankentlüftungsventil, alle diese Bauteile können an anderer Stelle in gleicher Art und Weise mit dem Behälter über den Öffnungen dicht angeschweißt werden. Hierdurch werden die Kosten bei der Endmontage verringert.

Ausführungsformen der Erfindung sind mit Bezugnahme auf die Zeichnungen näher erläutert.

Die Erfindung ist in der Zeichnung dargestellt und wird im Folgenden näher erläutert.

Es zeigen:

Figur 1 ein an einem Behälter befestigtes als Stutzen ausgebildetes Bauteil in einer schematischen Schnittdarstellung,

Figur 2 ein an einem Behälter befestigtes als Tankentlüftungsventil ausgebildetes Bauteil in einer schematischen Schnittdarstellung,

Figur 3 in auseinander gezogener, geschnittener, schematischer Teildarstellung eine Ausführungsform einer Befestigung eines Rohrkörperelements eines Stutzens gemäß 1 bzw. Tankentlüftungsventils gemäß 2,

Figur 4 Ausführungsformen eines ersten Bauelements und eines zweiten Bauelements vor einem stoffschlüssigen Verbinden während einer Vorbehandlung in schematischer Darstellung und

Figur 5 Ausführungsformen eines erfindungsgemäßen Kraftstofftanks mit einem Kraftstoffanbauteil in schematischer Darstellung.

Behälter für Kraftstoffe sind in ihrer Formgebung immer komplizierter, um bei beengten Platzverhältnissen ein möglichst großes Fassungsvermögen bereitstellen zu können. Die Formgebung ist je nach Fahrzeugtyp sehr unterschiedlich. Kraftstoffanbauteile, wie Stutzen oder Ventile werden deshalb separat einzeln vorgefertigt und erst bei der Endmontage am Behälter angebracht. Die Behälter bestehen in der Regel aus mehreren Schichten, von denen die Außenwandung 41 aus Polyethylen ist.

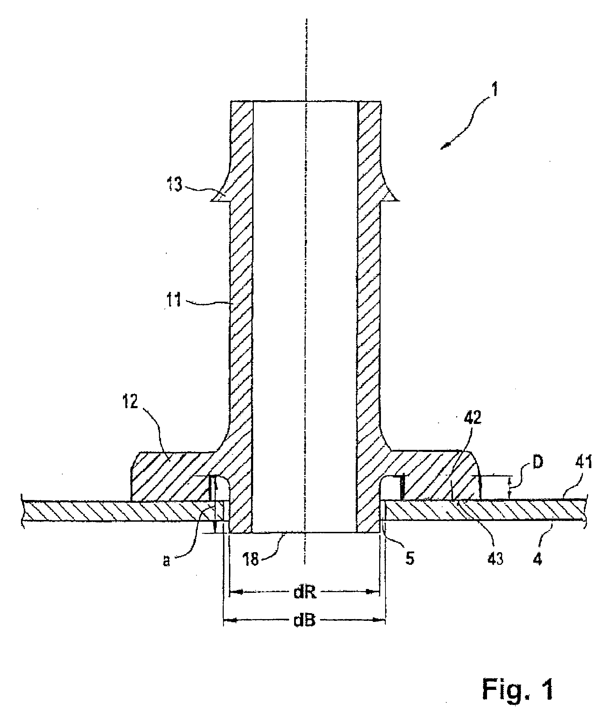

In Figur 1 ist ein Stutzen 1 gezeigt, der

- ein Rohrkörperelement 11 mit
- einem Ringkörperelement 12 aufweist.

Das Ringkörperelement 12 kann ähnlich einem ringförmigen Flanschkörper mit einer Dicke D weitergeführt werden. Das Ringkörperelement 12 befindet sich über einer Öffnung 5 des Behälters 4 . Das Ringkörperelement 12 des Rohrkörperelements 11 hat im Bereich der Öffnung 5 einen Abstand a zur Rohraustrittsöffnung 18, der größer als die Dicke D der flanschkörperförmigen Fortsetzung ist. Damit ragt das Rohrkörperelement 11 in die Öffnung 5 des Behälters 4 hinein. Außerdem ist ein Außendurchmesser dR des Rohrkörperelements 11 in etwa so groß wie ein Innendurchmesser dB der Öffnung, aber kleiner als ein Innendurchmesser dF einer flanschkörperförmigen Fortsetzung 36 des Ringkörperelements 12 (vgl. auch 3 ). Am entgegen gesetzten Ende des Rohrkörperelement 11 befindet sich eine Anschlusseinheit mit einer umlaufenden Halterippe 13.

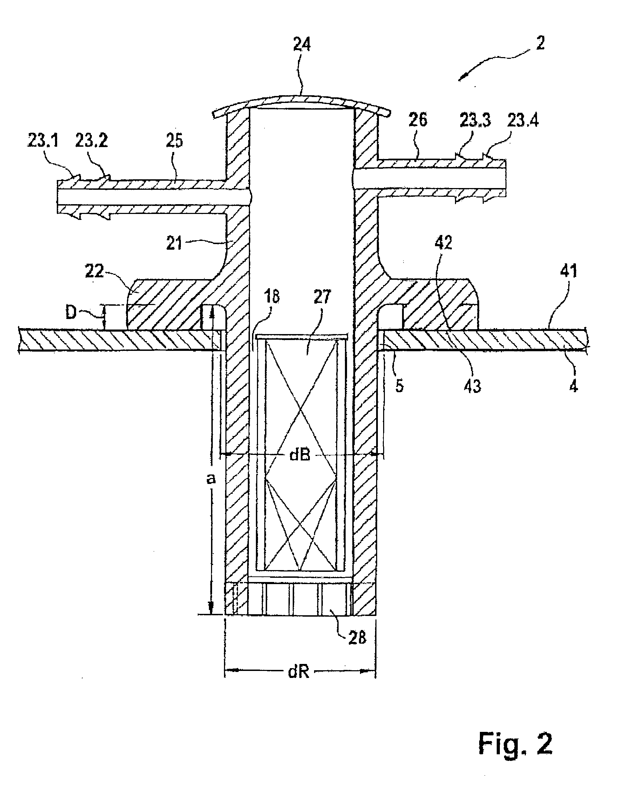

Ein in Figur 2 gezeigtes Ventilelement 2 weist

- ein Rohrkörperelement 21 mit
- einem Ringkörperelement 22 auf.

Unterhalb des Ringkörperelements 22 ist ebenfalls die flanschkörperförmige Fortsetzung 36 des ringförmige Flanschkörper 3 mit der Dicke D angeformt. Das Ringkörperelement 22 befindet sich über der Öffnung 5 des Behälters 4 . Das Ringkörperelement 22 des Rohrkörperelements 21 hat im Bereich der Öffnung 5 gleichfalls einen Abstand a zu seinem Ende, der wesentlich grösser als die Dicke D der flanschkörperförmigen Fortsetzung 36 ist. Damit ragt das Rohrkörperelement 21 weit in die Öffnung 5 des Behälters 4 hinein. Am Ende des Rohrkörperelements 21 sind Rohraustrittsöffnungen 28 angeordnet. Außerdem ist der Außendurchmesser dR des Rohrkörperelements 21 in etwa so groß wie der Innendurchmesser dB der Öffnung, aber kleiner als der Innendurchmesser dF der flanschkörperförmigen Fortsetzung 36 (vgl. auch 3 ). Das entgegen gesetzte Ende des Rohrkörperelements 21 ist mit einem Deckelelement 24 verschlossen. Unterhalb des Deckelelements sind am Rohrkörperelement 21 Anschlussrohrelemente 25 und 26 mit wenigstens einer umlaufenden Halterippe 23.1 , 23.2 , 23.3 , 23.4 angeordnet. In diesem so vorbereiteten Gehäuse ist ein Ventilelement 27 angeordnet.

Es besteht nun die Aufgabe, ein Kraftstoffanbauteil in Gestalt eines Stutzens 1 oder einer Ventileinheit 2 mit seinem Ringkörperelement 12 , 22 , im Folgenden Bauelement 12 an dem Behälter 4 über der Öffnung 5 anzubringen.

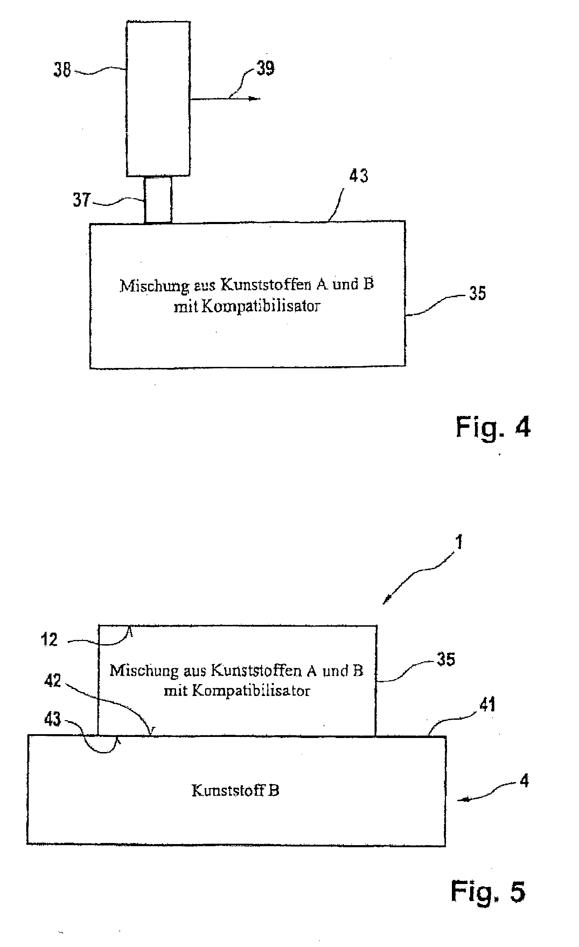

Die Figur 4 und Figur 5 zeigen schematisch Ausführungsformen des Bauelements 12 für das Kraftstoffanbauteils 1. Das Bauelement 12 besteht im wesentlichen aus einer Mischung 35 eines Kunststoffs A und eines Kunststoffs B.

Beim Kunststoff A handelt es sich um einen kraftstoffbeständigen Kunststoff, wie z. B. Polyamid, im Folgenden PA genannt, insbesondere PA12, POM oder einen anderen kraftstoffbeständigen thermoplastischen Kunststoff.

Beim Kunststoff B handelt es sich um einen nicht kraftstoffbeständigen Kunststoff, der mit dem Kunststoff A nicht mischbar ist.

Der Kunststoff B ist ein Polyethelen, im Folgenden PE genannt, insbesondere High Density PE (HDPE), Polypropylen (PP) oder ein anderer thermoplastischer, nicht mischbarer Kunststoff.

Zur Mischbarmachung der Kunststoffe A und B beinhaltet die Mischung einen Kompatibilisator, wie z, B. ein Copolymer der Kunststoffe A und B. Handelt es sich beim Kunststoff A um PA und beim Kunststoff B um PE, so kann es sich beim Copolymer um PEgPA (g = graft), d. h. ein gepfropftes bzw. um ein reaktiv erzeugtes Copolymer handeln. Das reaktiv erzeugte Copolymer wird hergestellt, indem beispielsweise das PE mit reaktiven Rest versehen wird, z. B. mit Maleinsäureanhydrid oder einem Acetylsäurerest, und indem anschließend das so gepfropfte PE mit dem PA kovalente Bindungen eingeht. Es kann aber auch umgekehrt PA gepfropft werden, um anschließend mit dem PE kovalente Bindungen eingehen. Alternativ kann die Reaktion auch einstufig erfolgen, d.h. die Kunststoffe A und B gehen miteinander oder über den einzigen Kompatibilisator in einem Reaktionsschritt eine Verbindung ein.

Verwendet wird im Ergebnis umfangreicher Versuche eine Mischung 35 mit folgender Zusammensetzung:

- ca. 45 Gew.-% Polyamid als erster Kunststoff,
- ca. 45 Gew.-% Polyethelen als zweiter Kunststoff,
- ca. 10 Gew.-% Kompatibilisator, Zusätze und Füllstoffe.

Für eine stoffschlüssige Verbindung einer ersten Ausführungsform des Bauelements 12 des Kraftstoffanbauteils 1 aus der Mischung 35 mit einer Außenwandung 41 eines Kraftstofftanks 4 , der im wesentlichen aus dem Kunststoff B, also PE besteht, wird hier eine Fügefläche 42 einer Vorbehandlung unterzogen. Die Vorbehandlung erfolgt mit einem Plasma 37 . Das Plasma strömt aus einer Plasmadüse 38 in Pfeilrichtung 38 entlang einer Fügefläche 42 bewegt wird, so dass die gesamte Fügefläche 42 überstrichen und eine Plasmaschicht 43 ausgebildet wird.

Durch die Beaufschlagung der Fügefläche 42 mit der Plasmaschicht 43 wird deren Reaktivität erhöht. Das erleichtert das Eingehen einer stoffschlüssigen Verbindung zwischen den Bauteilen 1 und 4.

Eine stoffschlüssige Verbindung einer zweiten Ausführungsform des Bauelements 12 des Kraftstoffanbauteils 1 aus der Mischung 35 mit einer Außenwandung 41 eines Kraftstofftanks 4 ist wie folgt möglich: Der Kraftstofftank 4 hat eine Außenwandung, die im wesentlichen aus dem Kunststoff B besteht. Da die Mischung 35 , aus der das Bauelement 12 besteht, auch den Kunststoff B beinhaltet, ist eine stoffschlüssige Verbindung zwischen den beiden Bauteilen 1 und 4 möglich. Insbesondere dann, wenn wie erwähnt, der Anteil des Kunststoffs B an der Mischung grösser als der des Kunststoffs A ist, kann auf eine solche Vorbehandlung der Fügefläche 42 verzichtet werden. Es liegt damit eine unbehandelte Fügefläche 42 vor.

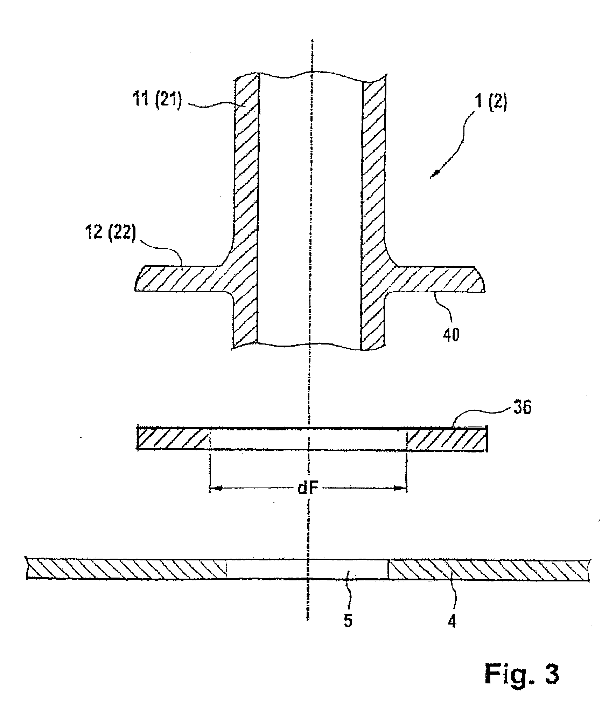

Die Herstellung und die Befestigung des Bauteils als Stutzen 1 gemäß Figur 1 bzw. des Bauteils als Tankentlüftungsventil 2 gemäß Figur 2 wird unter zu Hilfenahme der Figuren 3 bis 5 erläutert.

Der Stutzen 1 gemäß Figur 1 und die Ventileinheit 2 gemäß Figur 2 sind im Bereich Rohrkörperelement 11, 21 und Ringkörperelement 12, 22 ähnlich ausgebildet. Das Ringkörperelement geht dabei nasenförmig aus dem Rohrkörperelement hervor. Das Unterseitenflächenelement des Ringkörperelements ist im wesentlichen eben ausgebildet. Die äußeren Übergänge sind gerundet, während die Innenwandung glatt durchgeht.

Das Rohrkörperelement 11, 21 und Ringkörperelement 12, 22 werden aus der Mischung 35 von PE und PA mit dem reaktiv erzeugten PEgPA Copolymer als Kompatibilisator mittels Spritzguss geformt, vorzugsweise durch Ein-Komponenten Spritzguss der Mischung. Die Mischung 35 kann Zusätze wie Gleitmittel, metallische Pigmente und dgl., wie z. B. Verstärkungsstoffe, insbesondere Glasfasern, aufweisen. (vgl. Figuren 4 und 5).

Die Fügefläche des Ringkörperelement 12, 22 kann als

- unbehandelte Fügefläche 42 oder
- behandelte Fügefläche 43 ausgebildet werden.

Die Behandlung der Fügefläche 43 wird durch eine Aktivierung, z. B. Plasmabehandlung oder eine Plasmabeschichtung, vorgenommen. Die Dicke der Schicht kann ca. 0, 001 μm bis 100 μm betragen.

Für die stoffschlüssige Verbindung

- der Außenwandung 41 des Behälters 4 aus PE mit
- dem Ringkörperelement 12 , 22 aus der Mischung 35 von PE und PA mit dem reaktiv erzeugten PEgPA Copolymer als Kompatibilisator bestehen folgende Möglichkeiten

a) das Ringkörperelement 12 , 22 weist eine unbehandelte Fügefläche 42 auf,

b) das Ringkörperelement 12 , 22 weist eine behandelte Fügefläche 43 auf,

c) das Ringkörperelement 12 , 22 ist um die flanschkörperförmige Fortsetzung 36 verlängert (vgl. auch 3 ) und weist eine unbehandelte Fügefläche 42 auf und

d) das Ringkörperelement 12 , 22 ist um die flanschkörperförmige Fortsetzung 36 verlängert (vgl. auch 3 ) und weist eine behandelte Fügefläche 43 auf.

Bei dem Stutzen 1 endet das Rohrkörperelement 11 in der umlaufenden Halterippe 13 . Das entgegengesetzte Ende 28 ist von der Unterkante Flanschkörperelement gerade so lang, dass es kurz über die Innenwandung des Behälters 4 in diesen hinein reichen kann.

Bei dem Tankentlüftungsventil 2 hingegen wird das Rohrkörperelement 21 mit dem Deckelelement 24 verschlossen. Unterhalb des Deckelelements werden an das Rohrkörperelement 21 Anschlussrohrelemente 25 , 26 mit Halterippen 23.1 , ..., 23.4 angeformt. Das dem Deckelelement 24 gegenüberliegende Ende des Rohrkörperelements 21 ist so lang, dass es weit in den Behälter hinein ragen und in seinem Inneren das Ventilelement 27 aufnehmen kann. Damit die Gase ungehindert in das Ventilelement einfließen können, werden Rohraustrittsöffnungen 28 eingeformt.

Das Flächenelement 42 wird nun plasmabehandelt und so die Plasmaschicht 43 ausgebildet.

Das Plasma ist ein Gemisch aus positiven und negativen Ladungsträgern in relativ großer Dichte, neutralen Teilchen und Photonen. Die Dichten der positiven Ionen und der Elektronen sind dabei so groß, dass sich die Ladungen im zeitlichen Mittel an jeder Stelle kompensieren. Das Plasma ist als eigener Aggregatzustand aufzufassen.

Bei der Plasmazerstäubung (Kathodenstrahlzerstäubung) wird in einer Gasatmosphäre, z. B. Luft und deren Komponenten oder einer Edelgasatmosphäre, z. B. Helium, Neon, Argon, Krypton, Xenon, Radon und deren Verbindungen, eine Entladung gezündet. Die Ionen werden aus dem Plasma vom Träger, d. h. vom Flächenelement 43 des Rohrkörperelements 21, also dem PE-PA Gemisch als Target, d. h. Schichtmaterial extrahiert, das dabei zerstäubt wird. Hierbei werden Ionen in der Ionenquelle erzeugt und auf kurze Distanz beschleunigt und als Strahl auf das Flächenelement gelenkt. Hierdurch wächst unter offenen Bedingungen die Plasmaschicht 43.

Es können aber auch in einem Gas, insbesondere Luft, Komponenten enthalten sein, die im offenen Zustand an dem Flächenelement reagieren und die Plasmaschicht 43 ausbilden. Die Komponenten können organischer oder anorganischer Art sein.

Die Plasmaschicht 43 wird so in dem bereits genannten Dickenbereich von ca. $0,001\ \mu m$ bis $100\ \mu m$ aufgebracht.

Damit sind sowohl Stutzen 1 als auch Tankentlüftungsventil 2 für eine Befestigung am Behälter 4 vorbereitet.

Am Einsatzort werden der Stutzen 1 und das Tankentlüftungsventil 2 an der für sie vorgesehenen Öffnung 4 auf dem Behälter 4 aus PE angeschweißt. Das Flanschkörperelement 12 , 21 und die Außenwandung 41 des Behälters 4 sind miteinander verbunden.

Für die Montage ist von Vorteil, dass alle Kraftstoffanbauteile aus dem gleichen Gemisch 35 hergestellt sind. Der Stutzen 1 und das Tankentlüftungsventil 2 werden durch ihre Gestaltung und das eingesetzte Kunststoffgemisch 35 flüssigkeitsdicht mit dem Behälter 4 verbunden.

Die Volumenausdehnungsindizes

$$PE < PE/PA$$

sind so gewählt, dass die stoffschlüssigen Verbindungen einer möglichen Quellung sicher standhalten, da eine Quellung- wenn auch in geringem Maße- auch bei kraftstoffbeständigem Kunststoff erfolgen kann.

**Patentansprüche**

1. Kraftstofftankanbauteil bestehend aus einer Mischung eines ersten Kunststoffs (A) und eines zweiten Kunststoffs (B), wobei der erste und der zweite Kunststoff nicht mischbar sind, wobei die Mischung einen Kompatibilisator zur Mischbarmachung der ersten und zweiten Kunststoffe enthält, wobei es sich bei dem ersten Kunststoff um einen kraftstoffbeständigen Kunststoff handelt, und wobei es sich bei dem zweiten Kunststoff um einen nicht kraftstoffbeständigen Kunststoff handelt, wobei es sich bei dem Kraftstofftankanbauteil um einen Stutzen, insbesondere einen Einfüllstutzen, oder ein Ventil, insbesondere ein Tankentlüftungsventil, oder ein Deckelelement handelt, wobei das Kraftstofftankanbauteil einstückig aus der Mischung geformt ist.

2. Kraftstofftankanbauteil nach Anspruch 1, wobei es sich bei dem Kompatibilisator um ein Copolymer des ersten und des zweiten Kunststoffs handelt, wobei der Anteil des Copolymers (AB) in der Mischung vorzugsweise höchstens 30 Gew.-%, vorzugsweise höchstens 15 Gew.-%, beträgt, wobei es sich vorzugsweise um ein gepfropftes Copolymer handelt, wobei das Copolymer vorzugsweise einen zusätzlichen Kompatibilisator aufweist.

3. Kraftstofftankanbauteil nach einem der vorhergehenden Ansprüche, wobei es sich bei dem ersten Kunststoff um Polyamid (PA), insbesondere PA6, PA66, PA11, PA12, PA-T , oder Polyoxymethylen (POM), Polyester, Polyacetat, Polyolyfin, Fluorthermoplast, Fluorpolymer oder Polyphenylsulfid handelt, und/oderwobei es sich bei dem zweiten Kunststoff um ein Polyethylen (PE) oder Polypropylen (PP) handelt.

4. Kraftstofftankanbauteil nach einem der vorhergehenden Ansprüche, wobei der Anteil des ersten Kunststoffs in der Mischung geringer als der Anteil des zweiten Kunststoffs ist.

5. Kraftstofftankanbauteil nach Anspruch 4, wobei der Anteil des ersten Kunststoffs maximal 40 Gew.-%, insbesondere zwischen 20 Gew.-% bis 30 Gew.-%

beträgt.

**6.** Kraftstofftankanbauteil nach einem der vorhergehenden Ansprüche, wobei das Kraftstofftankanbauteil zumindest in einem ersten Bereich für eine stoffschlüssige Verbindung mit einem zweiten Bereich (43) ausgebildet ist, wobei sich der zweite Bereich an einer Außenwandung (41) eines Kraftstofftanks (4) befindet.

**7.** Kraftstofftankanbauteil nach Anspruch 6, wobei der zweite Bereich den zweiten Kunststoff aufweist.

**8.** Kraftstofftank, insbesondere Kraftfahrzeugkraftstofftank (4), mit zumindest einem Kraftstofftankanbauteil (1; 2) nach einem der vorhergehenden Ansprüche, wobei das Kraftstofftankanbauteil mit einer Außenwandung des Kraftstofftanks stoffschlüssig verbunden ist.

**9.** Verfahren zur Herstellung eines Kraftstofftanksystems mit folgenden Schritten:

> - Herstellung eines Bauelements (12; 11, 12; 21, 22; 11.1; 21.1) aus einer Mischung des ersten Kunststoffs mit einem zweiten Kunststoff, wobei die Mischung einen Kompatibilisator beinhaltet, um die ersten und zweiten Kunststoffe mischbar zu machen, wobei der zweite Kunststoff nicht kraftstoffbeständig ist,
> - stoffschlüssiges Verbinden des Bauelements mit einer Wandung eines Kraftstofftanks.

**10.** Verfahren nach Anspruch 9, wobei es sich bei dem Kompatibilisator um ein Copolymer des ersten und des zweiten Kunststoffs handelt, wobei es sich vorzugsweise um ein gepfropftes Copolymer handelt, wobei eine Fügefläche (36; 42) des Bauelements vorzugsweise vor dem stoffschlüssigen Verbinden einer Vorbehandlung unterzogen wird, wobei die Vorbehandlung eine oder mehrere der folgenden Maßnahmen beinhaltet:

> - Plasmabehandlung,
> - Plasmabeschichtung,
> - Beflammen,
> - chemisches Ätzen,
> - mechanische Vorbehandlung, insbesondere Aufrauhen.

**11.** Verfahren nach einem der vorhergehenden Ansprüche 9 oder 10, wobei das stoffschlüssige Verbinden durch Verschweißen erfolgt.

**12.** Verfahren nach einem der vorhergehenden Ansprüche 9 bis 11, wobei das Kraftstofftankanbauteil durch ein Kunststoff-Spritzguss-Verfahren, insbesondere ein Ein-Komponenten Kunststoff-Spritzguss-Verfahren hergestellt wird, , indem die Mischung in eine Form eingespritzt wird.

**13.** Verfahren nach einem der vorhergehenden Ansprüche 9 bis 12, wobei zur Herstellung des Copolymers ein zusätzlicher Kompatibilisator verwendet wird, der einer Mischung des ersten und des zweiten Kunststoffs in fester oder flüssiger Form zugegeben wird, und der zumindest teilweise bei der Copolymerisierung verbraucht wird.

**14.** Verfahren nach Anspruch 13, wobei der zusätzliche Kompatibilisator reaktive Isocyanatgruppen und/ oder Oligomere mit Epoxidgruppen und/ oder (Maleinsäure-) Anhydrid-Gruppen oder Oxazolin-Gruppen beinhaltet.

## Claims

**1.** A fuel tank attachment part, comprising a mixture of a first plastic material (A) and a second plastic material (B), the first and second plastic materials not being miscible, the mixture comprising a compatibilizer for rendering the first and second plastic materials miscible, the first plastic material being a fuel-resistant plastic material and the second plastic material being a non-fuel-resistant plastic material, the fuel tank attachment being a neck, in particular a filler neck, or a valve, in particular a tank vent valve, or a cover element, and the fuel tank attachment part being formed integrally from the mixture.

**2.** The fuel tank attachment part according to claim 1, wherein the compatibilizer is a copolymer of the first and second plastic materials, the content of the copolymer (AB) in the mixture preferably not exceeding 30% by weight, and preferably not exceeding 15% by weight, this copolymer preferably being a graft copolymer, the copolymer preferably comprising an additional compatibilizer.

**3.** A fuel tank attachment part according to any one of the preceding claims, wherein the first plastic material is polyamide (PA), and more particularly PA6, PA66, PA11, PA12, PA-T or polyoxymethylene (POM), polyester, polyacetate, polyolefin, fluorothermoplast, fluoropolymer or polyphenyl sulfide, and/or wherein the second plastic material is polyethylene (PE) or polypropylene (PP).

**4.** A fuel tank attachment part according to any one of the preceding claims, wherein the content of the first plastic material in the mixture is lower than the content of the second plastic material.

**5.** The fuel tank attachment part according to claim 4, wherein the content of the first plastic material does not exceed 40% by weight, and more particularly ranges between 20% by weight and 30% by weight.

6. A fuel tank attachment part according to any one of the preceding claims, wherein the fuel tank attachment part, at least in a first region, is designed to be connected by way of bonding to a second region (43), the second being located on an outside wall (41) of a fuel tank (4).

7. The fuel tank attachment part according to claim 6, wherein the second region comprises the second plastic material.

8. A fuel tank, in particular a motor vehicle fuel tank (4), comprising at least one fuel tank attachment part (1; 2) according to any one of the preceding claims, wherein the fuel tank attachment part is connected by way of bonding to an outside wall of the fuel tank.

9. A method for producing a fuel tank system, comprising the following steps:

   - producing a component (12; 11, 12; 21, 22; 11.1; 21.1) from a mixture of the first plastic material with a second plastic material, the mixture including a compatibilizer so as to render the first and second plastic materials miscible, the second plastic material not being fuel-resistant; and
   - connecting by way of bonding the component to a wall of a fuel tank.

10. The method according to claim 9, wherein the compatibilizer is a copolymer of the first and second plastic materials, this copolymer preferably being a graft copolymer, a joining surface (36; 42) of the component being subjected to a pretreatment, preferably prior to the connecting by way of bonding, the pretreatment including one or more of the following measures:

   - plasma treatment;
   - plasma coating;
   - flame treatment;
   - chemical etching; and
   - mechanical pretreatment, in particular roughening.

11. The method according to either one of the preceding claims 9 or 10, wherein the connecting by way of bonding is carried out by way of welding.

12. A method according to any one of the preceding claims 9 to 11, wherein the fuel tank attachment part is produced using a plastic injection molding method, and more particularly a single-component plastic injection molding method, in which the mixture is injected into a mold.

13. A method according to any one of the preceding claims 9 to 12, wherein an additional compatibilizer, which is added to a mixture of the first and second plastic materials in solid or liquid form and which is consumed at least partially during copolymerization, is used to produce the copolymer.

14. The method according to claim 13, wherein the additional compatibilizer includes reactive isocyanate groups and/or oligomers having epoxy groups and/or (maleic acid) anhydride groups or oxazoline groups.

**Revendications**

1. Composant rapporté pour réservoir de carburant, constitué d'un mélange d'une première matière plastique (A) et d'une deuxième matière plastique (B), lesquelles première et deuxième matières plastiques ne sont pas miscibles, dans lequel le mélange contient un agent compatibilisant afin de rendre miscibles les première et deuxième matières plastiques, la première matière plastique est une matière plastique résistante au carburant et la deuxième matière plastique est une matière plastique non résistante au carburant, le composant rapporté pour réservoir de carburant est une tubulure, en particulier une tubulure de remplissage, ou un clapet, en particulier une soupape de dégazage du réservoir, ou un élément de recouvrement, et le composant rapporté pour réservoir de carburant est formé d'une seule pièce à partir du mélange.

2. Composant rapporté pour réservoir de carburant selon la revendication 1, dans lequel l'agent compatibilisant est un copolymère de la première et de la deuxième matière plastique, la proportion du copolymère (AB) dans le mélange est de préférence au maximum égale à 30 % en poids, de préférence au maximum égale à 15 % en poids, le copolymère est de préférence un copolymère greffé et il comprend de préférence un agent compatibilisant supplémentaire.

3. Composant rapporté pour réservoir de carburant selon l'une des revendications précédentes, dans lequel la première matière plastique est un polyamide (PA), en particulier du PA6, PA66, PA11, PA12, PA-T, ou du polyoxyméthylène (POM), un polyester, un polyacétate, une polyoléfine, un fluorothermoplastique, un fluoropolymère ou du polysulfure de phényle, et/ou dans lequel la deuxième matière plastique est du polyéthylène (PE) ou du polypropylène (PP).

4. Composant rapporté pour réservoir de carburant selon l'une des revendications précédentes, dans lequel la proportion de la première matière plastique dans le mélange est inférieure à la proportion de la deuxième matière plastique.

5. Composant rapporté pour réservoir de carburant selon la revendication 4, dans lequel la proportion de la première matière plastique est au maximum égale à 40 % en poids, en particulier comprise entre 20 % en poids et 30 % en poids.

6. Composant rapporté pour réservoir de carburant selon l'une des revendications précédentes, dans lequel ledit composant rapporté pour réservoir de carburant est conçu au moins dans une première zone pour être fixé par liaison de matière à une deuxième zone (43), laquelle deuxième zone se trouve sur une paroi extérieure (41) d'un réservoir de carburant (4).

7. Composant rapporté pour réservoir de carburant selon la revendication 6, dans lequel la deuxième zone comprend la deuxième matière plastique.

8. Réservoir de carburant, en particulier réservoir de carburant pour véhicule à moteur (4), comprenant au moins un composant rapporté pour réservoir de carburant (1 ; 2) selon l'une des revendications précédentes, lequel composant rapporté pour réservoir de carburant est fixé par liaison de matière à une paroi extérieure du réservoir de carburant.

9. Procédé de fabrication d'un système de réservoir de carburant, comprenant les étapes suivantes :

- fabrication d'un composant (12 ; 11, 12 ; 21, 22 ; 11.1; 21.1) à partir d'un mélange de la première matière plastique et d'une deuxième matière plastique, le mélange contenant un agent compatibilisant afin de rendre miscibles la première et la deuxième matière plastique, laquelle deuxième matière plastique n'est pas résistante au carburant,
- fixation du composant par liaison de matière à une paroi d'un réservoir de carburant.

10. Procédé selon la revendication 9, dans lequel l'agent compatibilisant est un copolymère de la première et de la deuxième matière plastique, ledit copolymère est de préférence un copolymère greffé, une surface d'assemblage (36 ; 42) du composant est de préférence soumise à un prétraitement avant la fixation par liaison de matière, ledit prétraitement comprenant une ou plusieurs des mesures suivantes :

- traitement par plasma,
- revêtement par plasma,
- traitement à la flamme,
- mordançage chimique,
- prétraitement mécanique, en particulier rugosification.

11. Procédé selon l'une des revendications 9 ou 10 précédentes, dans lequel la fixation par liaison de matière se fait par soudage.

12. Procédé selon l'une des revendications 9 à 11 précédentes, dans lequel le composant rapporté pour réservoir de carburant est fabriqué par un procédé de moulage plastique par injection, en particulier un procédé de moulage plastique par injection monocomposant, en injectant le mélange dans un moule.

13. Procédé selon l'une des revendications 9 à 12 précédentes, dans lequel on utilise pour fabriquer le copolymère un agent compatibilisant supplémentaire que l'on ajoute sous forme solide ou liquide à un mélange de la première et de la deuxième matière plastique et qui est utilisé au moins en partie lors de la copolymérisation.

14. Procédé selon la revendication 13, dans lequel l'agent compatibilisant supplémentaire contient des groupes isocyanate réactifs et/ou des oligomères portant des groupes époxyde et/ou des groupes anhydride (maléique) ou des groupes oxazoline.

EP 2 512 857 B1

Fig. 1

12

Fig. 2

11 (21)

1 (2)

12 (22)

40

36

dF

5

4

Fig. 3

**Fig. 4**

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2006099365 A1
- EP 1108653 A2
- US 20030124281 A1
- DE 19535413 C1
- DE 10062997 A1
- WO 2008113821 A1
- WO 2008113821 A
- DE 10223865 A1
- EP 0986939 B1